# EUROPÄISCHE PATENTANMELDUNG

(11) **EP 4 555 867 A1**
(43) Veröffentlichungstag der Anmeldung: **21.05.2025**
(21) Anmeldenummer: 23210859.7
(22) Anmeldetag: 20.11.2023
(51) Int. Cl.: A23C 21/02, A23C 1/00, A23J 1/20, A23C 9/12, A23C 9/142

(54) **LACTOSEFREIE MOLKENPROTEINKONZENTRATE**

(71) Anmelder: Wheyco GmbH, 17087 Altentreptow (DE)
(72) Erfinder: SAMTLEBE, Meike, 17039 Trollenhagen (DE); AUE, Kerstin, 20255 Hamburg (DE)
(74) Vertreter: Fabry, Bernd

(57) **Zusammenfassung**

Vorgeschlagen werden Molkenproteinkonzentrate (MPK2), erhalten oder erhältlich gemäß den folgenden Schritten:
(a) Bereitstellen einer Molkequelle (M);
(b) Ultrafiltration der der Molke (M) aus Schritt (a) unter Erhalt eines ersten Permeats (P1) und eines ersten Retentats (R1);
(c) gegebenenfalls Ultrafiltration des ersten Retentats (R1) aus Schritt (b) unter Erhalt eines zweiten Permeats (P2) und eines zweiten Retentats (R2);
(d) gegebenenfalls Entwässerung des zweiten Retentats (R2) aus Schritt (c) unter Erhalt eines lactosehaltigen Molkenproteinkonzentrats (MPK1);
(e) Versetzen des zweiten Retentats (R2) aus Schritt (b oder c) oder des lactosehaltigen Molkenproteinkonzentrats (MPK1) aus Schritt (d) mit Lactase unter Hydrolyse der noch enthaltenen Lactose zum Erhalt eines lactosefreien Molkenproteinkonzentrats (MPK2); sowie gegebenenfalls
(f) Sprühtrocknen des lactosefreien Molkenproteinkonzentrats (MPK2) aus Schritt (e).

## Beschreibung

### GEBIET DER ERFINDUNG

Die vorliegende Erfindung befindet sich auf dem Gebiet der Milchindustrie und betrifft lactosefreie Molkenproteinkonzentrate sowie ein Verfahren zu deren Herstellung.

### TECHNOLOGISCHER HINTERGRUND

Molke ist die wässrige grünlich-gelbe Restflüssigkeit, die bei der Käseherstellung entsteht. Sie ist der flüssige Teil, der nach der Gerinnung der Milch zu Käse oder Quark abgesondert werden kann. Molke besteht zu 94 % aus Wasser, zu 4 bis 5 % aus Lactose und ist nahezu fettfrei. Außerdem enthält sie Milchsäure, die Vitamine B₁, B₂ (dies bewirkt die grünliche Farbe) und B₆ sowie Kalium, Calcium, Phosphor und andere Mineralstoffe, doch vor allem 0,6 bis 1 Gew.-% Molkenprotein. Molke enthält deutlich weniger Eiweiß als Milch. Insbesondere enthält sie anders als Milch kein Kasein. Viele Kraftsportler benutzen das Molkenprotein für den Muskelaufbau in Form von Proteinpulver, da das Molkenprotein schnell verdaut wird und dem Körper somit schnell zur Verfügung steht. Es wird daher häufig in Pre- und Post-Workout-Shakes eingesetzt. Das eiweißhaltige Molkepulver findet darüber hinaus auch in Bäckereien, bei der Fertignahrungsherstellung und in den Molkereien selbst Anwendung.

Molke stellt damit eine wichtige Quelle für Proteine sowohl für die menschliche als auch tierische Ernährung dar. Von Nachteil ist jedoch der hohe Lactosegehalt, der in Zeiten vielfach verbreiteter Lactoseintoleranz unerwünscht ist.

### STAND DER TECHNIK

EP 2493325 B1 (VALIO) beansprucht Molkenproteine, die erhalten werden, indem man im ersten Schritt ein Milch-Ausgangsprodukt einer Mikrofiltration unterwirft und den Caseinanteil als Retentat abtrennt, das Permeat einer Ultrafiltration unterzieht und dabei ein Molkenproteinkonzentrat als Retentat erhält, sowie schließlich die beiden Retentate wieder vermischt. Es ist kein Lactosehydrolyse-Schritt enthalten.

EP 2773222 A1 (FONTERRA) offenbart ein Verfahren zur Herstellung einer Lösung, enthaltend nicht-denaturierte Molkenproteine. Das Verfahren sieht keine Hydrolyse der enthaltenen Lactose vor.

WO 06068521 A1 (FONTERRA) betrifft ein Verfahren zur Herstellung von Molkenproteinkonzentraten, bei der man eine Molkenproteinlösung durch Erhitzen denaturiert, abkühlt und dann versprüht. Das Verfahren sieht keine Lactose-hydrolyse vor.

WO 11046431 A1 (FRIESLAND) lehrt ein Verfahren zur Herstellung von Molkenproteinkonzentraten, bei dem man Sauermolke mit Carbonaten versetzt, die Mischung einer Ultrafiltration unterzieht und die carbonathaltige Sauermolke versprüht. Das Verfahren sieht keine Hydrolyse der enthaltenen Lactose vor.

WO 12121131 A1 (MEIJI) beansprucht ein Verfahren zur Herstellung von fermentierter Milch, bei der man Molkepulver in Rohmilch auflöst und die enthaltene Lactose durch Zugabe von Lactase hydrolysiert. Es werden jedoch keine Molkenproteinkonzentrate hergestellt.

### AUFGABE DER ERFINDUNG

Die Abtrennung der Lactose aus der Molke hat sich in der Vergangenheit als schwierig bis technisch nicht durchführbar erwiesen. Eine Möglichkeit bestünde darin, eine Diafiltration mit Wasser durchzuführen. Dazu müsste man, um auf einen Restlactosegehalt von weniger als 0,1 Gew.-% oder sogar weniger als 0,01 Gew.-% zu kommen, ausgehend von einem Molkenproteinkonzentrat mit 80 Gew.-% Protein und mit etwa 15 bis 40 Gew.-% Trockenmasse mit der 8 bis 10fach höheren Trinkwassermenge wie das Ausgangsvolumen des Konzentrats waschen. Das wertvolle Trinkwasser würde dadurch zu Abwasser, das eine hohe Fracht in die Kläranlage bringt. Dies wären bei einer Charge am Tag etwa 500.000 Liter Frischwasser, die zu 500.000 Liter Abwasser werden. Für einen solchen Waschprozess wären zudem Filtrationsanlagen notwendig, die 10 bis 20mal so groß wären, wie die heutigen, um das Molkenproteinkonzentrat herzustellen und die Diafiltration überhaupt durchzuführen. Schließlich würde man durch das Herauswaschen der Lactose auch alle Mineralstoffe entfernen, sprich aus dem Molkenproteinkonzentrat mit 80 Gew. % Protein würde ein ganz anderes Produkt entstehen, das nur noch aus Proteinen und geringen Mengen Fett besteht und daher eher einem Molkenproteinisolat mit 95 Gew.-% Protein entspräche. Es ist klar, dass im Hinblick auf den enormen Energie- und Ressourcenverbrauch ein solches Verfahren nicht zu realisieren wäre.

Daher hat die Aufgabe der vorliegenden Erfindung darin bestanden, Molkenproteinkonzentrate in flüssiger Form bzw. in Form von trockenen oder annähernd trockenen Pulvern mit Hilfe eines technisch leicht zu realisierenden Prozesses zur Verfügung zu stellen, die frei von Lactose sind, d.h. die bezogen auf die Produkte eine Restmenge an Lactose unter 0,1 Gew.-% und insbesondere unter 0,01 Gew.-% aufweisen.

### BESCHREIBUNG DER ERFINDUNG

Ein erster Gegenstand der Erfindung betrifft lactosefreie Molkenproteinkonzentrate (MPK2), erhalten oder erhältlich gemäß den folgenden Schritten:
(a) Bereitstellen einer Molkequelle (M);
(b) Ultrafiltration der Molke (M) aus Schritt (a) unter Erhalt eines ersten Permeats (P1) und eines ersten Retentats (R1);
(c) gegebenenfalls Ultrafiltration des ersten Retentats (R1) aus Schritt (b) unter Erhalt eines zweiten Permeats (P2) und eines zweiten Retentats (R2);
(d) gegebenenfalls Entwässerung des zweiten Retentats (R2) aus Schritt (c) unter Erhalt eines lactosehaltigen Molkenproteinkonzentrats (MPK1);
(e) Versetzen des zweiten Retentats (R2) aus Schritt (b oder c) oder des lactosehaltigen Molkenproteinkonzentrats (MPK1) aus Schritt (d) mit Lactase unter Hydrolyse der noch enthaltenen Lactose zum Erhalt eines lactosefreien Molkenproteinkonzentrats (MPK2); sowie gegebenenfalls
(f) Sprühtrocknen des lactosefreien Molkenproteinkonzentrats (MPK2) aus Schritt (e).

Ebenfalls beansprucht wird ein entsprechendes Verfahren zur Herstellung von lactosefreien Molkenproteinkonzentraten (MPK2), umfassend oder bestehend aus den folgenden Schritten:
(a) Bereitstellen einer Molkequelle (M);
(b) Ultrafiltration der Molke (M) aus Schritt (a) unter Erhalt eines ersten Permeats (P1) und eines ersten Retentats (R1);
(c) gegebenenfalls Ultrafiltration des ersten Retentats (R1) aus Schritt (b) unter Erhalt eines zweiten Permeats (P2) und eines zweiten Retentats (R2);
(d) gegebenenfalls Entwässerung des zweiten Retentats (R2) aus Schritt (c) unter Erhalt eines lactosehaltigen Molkenproteinkonzentrats (MPK1);
(e) Versetzen des zweiten Retentats (R2) aus Schritt (b oder c) oder des lactosehaltigen Molkenproteinkonzentrats (MPK1) aus Schritt (d) mit Lactase unter Hydrolyse der noch enthaltenen Lactose zum Erhalt eines lactosefreien Molkenproteinkonzentrats (MPK2); sowie gegebenenfalls
(f) Sprühtrocknen des lactosefreien Molkenproteinkonzentrats (MPK2) aus Schritt (e).

In der Ausführungsform, gemäß der zwei Ultrafiltrationsschritte erfolgen, können diese auch auf einer Anlage nacheinander durchgeführt werden.

Überraschenderweise wurde gefunden, dass das erfindungsgemäße Verfahren eine neue Produktqualität von Molkenproteinpulvern zugänglich macht, die praktisch frei von Lactose und daher insbesondere auch für Menschen geeignet sind, die an Lactoseintoleranz leiden. Das Verfahren ist zudem technisch einfach durchzuführen. Insbesondere die Zugabe der Lactase nach Abschluss aller Filtrations- und Anreicherungsschritte hat sich als kritisch erwiesen, da nur auf diesem Wege sichergestellt werden kann, dass sich der Nährwert des Endproduktes nicht vermindert. Insbesondere besteht nicht die Gefahr, man Einfachzucker auf der Filtrationsanlage "verliert". Der räumlich und zeitlich abgegrenzte Prozess stellt insbesondere sicher, dass sich das Enzym nicht auf weitere Prozessteile verteilen kann und die Produktqualität verändert.

### Ausgangsstoffe

Als Molkequellen kommen beispielsweise Dünnmolke mit einer Trockenmasse von etwa 5 Gew.-% oder Molkenkonzentrate mit Trockenmassen um die 30 Gew.-% in Frage. Vorzugsweise werden Mischungen der beiden Ausgangsstoffe ("Mixmolke") verwendet, die Trockenmassen von etwa 5 bis etwa 20 Gew.-% und insbesondere von etwa 8 bis etwa 12 Gew.-% aufweisen.

### Ultrafiltration

Ultra- und Nanofiltration sind Filtrationsverfahren aus dem Bereich der Membrantechnik, mit der sich makromolekulare Substanzen und kleine Partikel aus einem Medium abtrennen und konzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der bei Ultra- und Mikrofiltration zwischen 0,1 und 10 bar und bei der Nanofiltration bis ca. 40 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert), Transmembranfluss oder Durchtrittsrate machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 2.000 und vorzugsweise etwa 150 bis 1.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für Ultra- und Nanofiltration und die zweite für die Mikrofiltration besonders bevorzugt erwiesen hat.

Die Angaben zum Cut-off überschneiden sich im Grenzbereich, so dass sich beispielsweise eine Membran mit einem Porendurchmesser von etwa 2.000 Dalton sowohl für eine Ultra- als auch eine Nanofiltration eignen kann.

Die Ultrafiltrationsschritte (b) und (c) dienen im Kontext des erfindungsgemäßen Verfahrens im Wesentlichen dazu, den Wassergehalt zu reduzieren, Mineralstoffe sowie die Hauptmenge an Lactose abzutrennen und den Proteingehalt in der Trockenmasse anzureichern. Üblicherweise wird bei der ersten Ultrafiltration im Schritt (b) ein Retentat (R1) hergestellt, das eine Trockenmasse von etwa 10 bis etwa 20 Gew.-% aufweist, während das Retentat (R2), das bei der zweiten Ultrafiltration anfällt, eine Trockenmasse von etwa 20 bis etwa 40 Gew.-% aufweist. Man kann diese beiden Ultrafiltrationsschritte aber auch gegebenenfalls kombinieren.

Typischerweise führt man die erste und die zweite Ultrafiltration in den Schritten (b) und (c) im Temperaturbereich von etwa 2 bis etwa 25 °C und insbesondere etwa 5 bis etwa 15 °C sowie im Druckbereich von etwa 0,1 bis etwa 15 bar, vorzugsweise etwa 1 bis etwa 10 bar durch. Dabei hat es sich als vorteilhaft erwiesen, wenn man die zweite Ultrafiltration im Schritt (c) in Gegenwart von Trinkwasser oder dem Permeat einer Umkehrosmoseanlage durchführt, wobei die Verdünnung bei der zweiten Ultrafiltration im Schritt (c) etwa 20 bis etwa 200 %, vorzugsweise etwa 50 bis etwa 150 % - bezogen auf den Zulauf (R2) - betragen kann.

### Entwässerung

Nicht zwingend erforderlich, aber bevorzugt ist ein weiterer Schritt (d) zur Entwässerung der Produkte, der sich an die zweite Ultrafiltration anschließt. Dabei kann es sich um eine weitere Ultrafiltration, Nanofiltration, Umkehrosmose oder Eindampfung oder eine Kombination der genannten Prozesse durchführt. Die Verfahren Ultrafiltration und Nanofiltration sind oben bereits beschrieben worden.

Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird. Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 60 bar. Der Konzentrierungsfaktor- entsprechend der Menge an verbliebenem Wasser im Konzentrat und der Ausgangsmenge - kann dabei zwischen etwa 2 und etwa 100, vorzugsweise etwa 5 und etwa 50 und insbesondere 10 bis etwa 25 liegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

Die Konzentrierung im Schritt (d) kann zudem durch einfaches Eindampfen in einem Kessel erfolgen, bei dem das Produkt erhitzt und der Wasserdampf abgeführt wird.
Unter den genannten Verfahrensalternativen ist die Nanofiltration bevorzugt. Unabhängig von der Ausgestaltung dieses Verfahrensschrittes wird im Schritt (d) ein lactosehaltiges Molkenproteinkonzentrat (MPK1) erhalten, das eine Trockenmasse von etwa 25 bis etwa 50 Gew.-% aufweist.

### Hydrolyse

Die enzymatische Hydrolyse der Lactose wird erfindungsgemäß mit Lactase durchgeführt. Alternativ könnten auch Polymerasen oder Esterasen eingesetzt werden. Die Lactose würde dann aber umgeestert oder verknüpft werden. Durch das Verknüpfen käme es jedoch zu funktionellen Veränderungen des Produktes. Zudem sind diese Enzyme nicht spezifisch und kommen nicht auf den gewünschten Restlactosegehalt < 0,1% bis sogar < 0,01%. Die Hydrolyse kann im Sinne des erfindungsgemäßen Verfahrens sowohl batchweise als auch kontinuierlich durchgeführt werden.

Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 5 bis etwa 50 °C sowie einem leicht sauren pH-Wert von etwa 5 bis 6 durchzuführen. Üblicherweise beträgt die Inkubationszeit 2 bis 12 Stunden.

Das resultierende lactosefreies Molkenproteinkonzentrat (MPK1 oder MPK2) weist anschließend eine Lactosekonzentration von maximal 0,1 Gew.-% und insbesondere weniger 0,01 Gew.-% - bezogen auf die Trockenmasse - auf.

### Sprühtrocknung

Wenn als Endprodukt trockene Pulver erhalten werden sollen, stellt die abschließende Sprühtrocknung das bevorzugte Trocknungsverfahren dar, wobei die Temperatur im Einlass typischerweise etwa 160 bis etwa 260 °C und am Ausgang etwa 60 bis etwa 120 °C beträgt. Alternativ können die Produkte auch durch Gefriertrocknung entwässert werden. Der Restwassergehalt beträgt in beiden dabei maximal 10 Gew.-% und vorzugsweise etwa 2 bis etwa 4 Gew.-%. Den Pulvern können vor, vorzugsweise aber nach dem Versprühen auch weitere Zusatzstoffe zugesetzt werden, wie beispielsweise Lactoferrin, Lecithine, Vitamine oder Lebensmittelemulgatoren **[**EP 1314367 A1, NESTLE] und dergleichen.

### GEWERBLICHE ANWENDBARKEIT

Ein weiterer Gegenstand der Erfindung betrifft die Verwendung der lactosefreien Molkenproteinpulver (MPP) oder erhalten nach dem Verfahren wie oben beschrieben für die menschliche oder tierische Ernährung.

### BEISPIELE

### Beispiel 1

### Herstellung eines lactosefreien Molkenproteinpulvers

1000 L einer vorkonzentrierten Mischmolke mit einer Trockenmasse von etwa 10 Gew.-% wurde mittels Ultrafiltration bei einer Temperatur von 15 °C und einem Druck von 2,5 bar auf ein Volumen von 200 L vermindert, wobei die gewünschten Proteine im Retentat (R1) konzentriert wurden; das angefallene Permeat (P1), welches die Mineralstoffe und einen Teil der Lactose enthielt, wurde anderen Verwendungen zugeführt. Die Trockenmasse im Retentat (R1) betrug dabei etwa 18 Gew.-%

Das Retentat R1 wurde einer weiteren Ultrafiltration unterworfen, die wieder bei einer Temperatur von 15 °C, aber einem Druck von 5 bar betrieben wurde. Dabei wurde Wasser aus dem Permeat einer Umkehrosmoseeinheit oder Trinkwasser in einem Verdünnungsverhältnis von 100 % eingespeist und auf diese Weise ein zweites Retentat R) erhalten, das eine Trockenmasse von etwa 33 Gew.-% aufwies; der Proteinanteil betrug etwa 80 Gew.-% % bezogen auf diese Trockenmasse.

Das Retentat R2 wurde anschließend einer Nanofiltration unterworfen, die bei etwa 12 °C und einem Druck von etwa 30 bar durchgeführt wurde. Das resultierende dritte Retentat R3 wies nun eine Trockenmasse von etwa 36 Gew.-% auf.

Anschließend wurde das Retentat R3 in einen Hydrolysetank gegeben und dort unter Rühren für 7 h bei 8 °C mit Lactase inkubiert, wobei der Anteil an Rest-Lactose auf 0,05 Gew.-% bezogen auf die Trockenmasse reduziert wurde. Anschließend wurde das lactosefreie Molkenproteinkonzentrat bei einer Zuluft-Temperatur von 200 und einer Abluft-Temperatur von 80 °C zu einem trockenen Pulver versprüht, welches noch eine Restfeuchte von 4 Gew.-% aufwies.

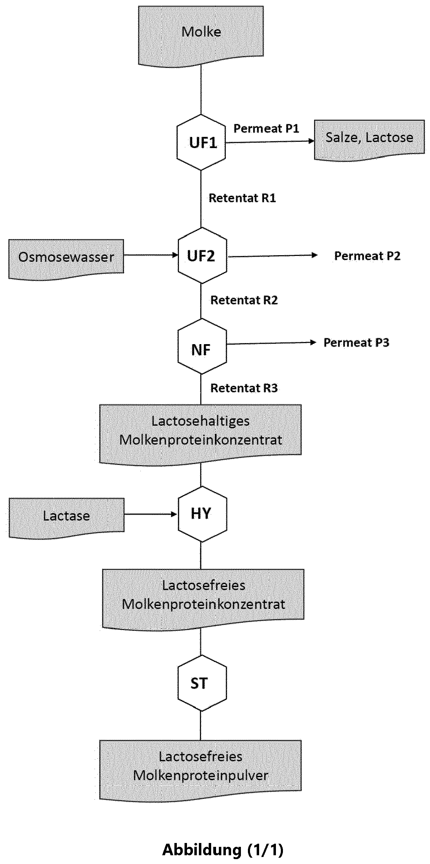

Die Erfindung wird durch ein beispielhaftes Fließschema in **Abbildung 1** näher erläutert. Dabei bedeuten:
UF = Ultrafiltration
NF = Nanofiltration
HY = Hydrolyse
ST = Sprühtrocknung

## Patentansprüche

1. Lactosefreie Molkenproteinkonzentrate (MPK2), erhalten oder erhältlich gemäß den folgenden Schritten:
(a) Bereitstellen einer Molkequelle (M);
(b) Ultrafiltration der Molke (M) aus Schritt (a) unter Erhalt eines ersten Permeats (P1) und eines ersten Retentats (R1);
(c) gegebenenfalls Ultrafiltration des ersten Retentats (R1) aus Schritt (b) unter Erhalt eines zweiten Permeats (P2) und eines zweiten Retentats (R2);
(d) gegebenenfalls Entwässerung des zweiten Retentats (R2) aus Schritt (c) unter Erhalt eines lactosehaltigen Molkenproteinkonzentrats (MPK1);
(e) Versetzen des zweiten Retentats (R2) aus Schritt (b oder c) oder des lactosehaltigen Molkenproteinkonzentrats (MPK1) aus Schritt (d) mit Lactase unter Hydrolyse der noch enthaltenen Lactose zum Erhalt eines lactosefreien Molkenproteinkonzentrats (MPK2); sowie gegebenenfalls
(f) Sprühtrocknen des lactosefreien Molkenproteinkonzentrats (MPK2) aus Schritt (e).

2. Verfahren zur Herstellung von lactosefreien Molkenproteinkonzentraten (MPK2), umfassend oder bestehend aus den folgenden Schritten:
(a) Bereitstellen einer Molkequelle (M);
(b) Ultrafiltration der der Molke (M) aus Schritt (a) unter Erhalt eines ersten Permeats (P1) und eines ersten Retentats (R1);
(c) gegebenenfalls Ultrafiltration des ersten Retentats (R1) aus Schritt (b) unter Erhalt eines zweiten Permeats (P2) und eines zweiten Retentats (R2);
(d) gegebenenfalls Entwässerung des zweiten Retentats (R2) aus Schritt (c) unter Erhalt eines lactosehaltigen Molkenproteinkonzentrats (MPK1);
(e) Versetzen des zweiten Retentats (R2) aus Schritt (b oder c) oder des lactosehaltigen Molkenproteinkonzentrats (MPK1) aus Schritt (d) mit Lactase unter Hydrolyse der noch enthaltenen Lactose zum Erhalt eines lactosefreien Molkenproteinkonzentrats (MPK2); sowie gegebenenfalls
(f) Sprühtrocknen des lactosefreien Molkenproteinkonzentrats (MPK2) aus Schritt (e).

3. Verfahren nach Anspruch 2, **dadurch gekennzeichnet, dass** man als Molkequelle (M) im Schritt (a) Dünnmolke oder ein Molkenkonzentrat oder deren Mischung einsetzt.

4. Verfahren nach den Ansprüchen 2 und/oder 3, **dadurch gekennzeichnet, dass** man im Schritt (a) eine Molkequelle (M) einsetzt, die eine Trockenmasse im Bereich von etwa 4 bis etwa 32 Gew.-% aufweist.

5. Verfahren nach mindestens einem der Ansprüche 2 bis 4, **dadurch gekennzeichnet, dass** man bei der ersten Ultrafiltration im Schritt (b) ein Retentat (R1) herstellt, das eine Trockenmasse von etwa 10 bis etwa 20 Gew.-% aufweist.

6. Verfahren nach mindestens einem der Ansprüche 2 bis 5, **dadurch gekennzeichnet, dass** man bei der zweiten Ultrafiltration im Schritt (c) ein Retentat (R2) herstellt, das eine Trockenmasse von etwa 20 bis etwa 40 Gew.-% aufweist.

7. Verfahren nach mindestens einem der Ansprüche 2 bis 6, **dadurch gekennzeichnet, dass** man die erste und die zweite Ultrafiltration in den Schritten (b) und (c) im Temperaturbereich von etwa 2 bis etwa 25 °C durchführt

8. Verfahren nach mindestens einem der Ansprüche 2 bis 7, **dadurch gekennzeichnet, dass** man die erste und die zweite Ultrafiltration in den Schritten (b) und (c) im Druckbereich von etwa 0,1 bis etwa 15 bar durchführt.

9. Verfahren nach mindestens einem der Ansprüche 2 bis 8, **dadurch gekennzeichnet, dass** man die zweite Ultrafiltration im Schritt (c) in Gegenwart von Trinkwasser oder dem Permeat einer Umkehrosmoseanlage durchführt.

10. Verfahren nach Anspruch 9, **dadurch gekennzeichnet, dass** die Verdünnung bei der zweiten Ultrafiltration im Schritt (c) etwa 20 bis etwa 200 % - bezogen auf den Zulauf - beträgt.

11. Verfahren nach mindestens einem der Ansprüche 2 bis 10, **dadurch gekennzeichnet, dass** man zur weiteren Entwässerung des zweiten Retentats (R2) im Schritt (d) eine weitere Ultrafiltration, Nanofiltration, Umkehrosmose oder Eindampfung oder eine Kombination der genannten Prozesse durchführt.

12. Verfahren nach Anspruch 11, **dadurch gekennzeichnet, dass** man im Schritt (d) ein lactosehaltiges Molkenproteinkonzentrat (MPK1) herstellt, das eine Trockenmasse von etwa 20 bis etwa 50 Gew.-% aufweist.

13. Verfahren nach mindestens einem der Ansprüche 2 bis 12, **dadurch gekennzeichnet, dass** man im Schritt (e) ein lactosefreies Molkenproteinkonzentrat (MPK2) herstellt, das eine Lactosekonzentration von maximal 0,1 Gew.-% - bezogen auf die Trockenmasse - aufweist.

14. Verfahren nach mindestens einem der Ansprüche 2 bis 13, **dadurch gekennzeichnet**, das man das lactosefreie Molkenproteinkonzentrat aus Schritt (f) bis auf einen Restwassergehalt von maximal 10 Gew.-% sprühtrocknet.

15. Verwendung der lactosefreien Molkenproteinpulver (MPP) nach Anspruch 1 oder erhalten nach dem Verfahren nach den Ansprüchen 2 bis 14 für die menschliche oder tierische Ernährung.
